# EUROPÄISCHE PATENTSCHRIFT

(11) **EP 0 437 433 B1**
(45) Veröffentlichungstag und Bekanntmachung des Hinweises auf die Patenterteilung: **28.02.1996**
(21) Anmeldenummer: 89903686.7
(22) Anmeldetag: 21.03.1989
(51) Int. Cl.: G01N 27/42

(54) **PLANARE POLAROGRAPHISCHE SONDE ZUR BESTIMMUNG DES $g(l)-WERTES VON GASGEMISCHEN**
PLANAR POLAROGRAPHIC PROBE FOR DETERMINING THE $g(l) VALUE OF GASEOUS MIXTURES
SONDE POLAROGRAPHIQUE PLANE POUR LA DETERMINATION DE LA VALEUR $g(l) D'UN MELANGE DE GAZ

(30) Priorität: 08.04.1988 DE 3811713
(43) Veröffentlichungstag der Anmeldung: 24.07.1991
(73) Patentinhaber: ROBERT BOSCH GMBH, D-70442 Stuttgart (DE)
(72) Erfinder: WIEDENMANN, Hans-Martin, D-7000 Stuttgart 1 (DE); SCHNEIDER, Gerhard, D-7141 Schwieberdingen (DE); BAYHA, Kurt, D-7141 Oberriexingen (DE)
(86) Internationale Anmeldenummer: DE8900174
(87) Internationale Veröffentlichungsnummer: WO8909933

(56) Entgegenhaltungen:
- EP-A- 0 011 530
- EP-A- 0 193 379
- EP-A- 0 194 082
- EP-A- 0 203 351
- EP-A- 0 259 175
- DE-A- 2 938 179
- DE-B- 3 728 618

## Beschreibung

### Stand der Technik

Die Erfindung geht aus von einer planaren polarographischen Sonde nach der Gattung des Hauptanspruchs. Bei derartigen polarographischen Sonden, die nach dem Diffusionswiderstandsprinzip arbeiten, wird der Diffusionsstrom bei einer konstanten, an den beiden Elektroden der Sonde anliegenden Spannung oder der Diffusionsgrenzstrom gemessen. Dieser Strom ist in einem bei Verbrennungsvorgängen entstehenden Abgas von der Sauerstoffkonzentration solange abhängig, wie die Diffusion des Gases zur Pumpelektrode die Geschwindigkeit der ablaufenden Reaktion bestimmt. Es ist bekannt, derartige, nach dem polaxgraphischen Meßprinzip arbeitende polarographische Sonden in der Weise aufzubauen, daß sowohl Anode als auch Kathode dem zu messenden Gas ausgesetzt sind, wobei die Kathode eine Diffusionsbarriere aufweist.

Die bekannten polarographischen Sonden dienen in der Regel zur Bestimmung des λ-Wertes von Gasgemischen, der das Verhältnis "Gesamtsauerstoff/zur vollständigen Verbrennung des Kraftstoffs benötigten Sauerstoff" des in einem Zylinder verbrennenden Luft/Kraftstoffgemisches bezeichnet, wobei die Sonden den Sauerstoffgehalt des Abgases über eine elektrochemische Potentialänderung ermitteln.

Aufgrund einer vereinfachten und kostengünstigen Herstellungsweise hat sich in der Praxis in den letzten Jahren die Herstellung von in Keramikfolien- und Siebdrucktechnik herstellbaren Sonden und Sensorelementen durchgesetzt.

In einfacher und rationeller Weise lassen sich planare polarographische Sonden ausgehend von plättchen- oder folienförmigen sauerstoffleitenden Festelektrolyten, z. B. aus stabilisiertem Zirkondioxid, herstellen, die beidseitig mit je einer inneren und äußeren Pumpelektrode mit dazugehörigen Leiterbahnen beschichtet werden. Die innere Pumpelektrode befindet sich dabei in vorteilhafter Weise im Randbereich eines Diffusionskanals, durch den das Meßgas zugeführt wird, und der als Gasdiffusionswiderstand dient.

Aus der DE-OS 35 43 759 sowie den EP-A 0 142 992, 0 142 993, 0 188 900 und 0 194 082 sind ferner Sensorelemente und Detektoren bekannt, denen gemein ist, daß sie jeweils eine Pumpzelle und eine Sensorzelle aufweisen, die aus plättchen- oder folienförmigen sauerstoffleitenden Festelektrolyten und zwei hierauf angeordneten Elektroden bestehen und einen gemeinsamen Diffusionskanal aufweisen. Fig. 28 der EP-A-0 194 082 offenbart z.B. eine Sonde gemäß Oberbegriff. Ähnliche Sonden sind aus der EP-A-259 175 bekannt. Ein gewisser Nachteil bekannter polarographischer Sonden und Sensorelemente besteht darin, daß der vordere, dem zugeführten Meßgas zugewandte Teil der inneren Pumpelektrode stärker als der hintere, dem zugeführten Meßgas abgewandte Teil der Pumpelektrode beansprucht wird. Dies führt zu einer hohen Elektroden-polarisation, die eine hohe Pumpspannung erfordert. Letztere wiederum birgt die Gefahr einer Elektrolytzersetzung im Bereich der inneren Pumpelektrode in sich.

In der DE-OS 37 28 618 wird daher vorgeschlagen, in einem Sensorelement für polarographische Sonden zur Bestimmung des λ-Wertes von Gasgemischen mit einem auf O⁻-Ionen leitenden plättchen- oder folienförmigen Festelektrolyten angeordneten äußeren und inneren Pumpelektroden, von denen die innere Pumpelektrode auf dem plättchen- oder folienförmigen Festelektrolyten in einem Diffusionskanal für das Meßgas angeordnet ist, sowie mit Leiterbahnen für die Pumpelektroden, in dem Diffusionskanal auf der der inneren Pumpelektrode gegenüberliegenden Seite mindestens eine zweite innere Pumpelektrode anzuordnen, die mit der ersten inneren Pumpelektrode kurzgeschlossen ist.

Nachteilig an bekannten planaren polarographischen Sonden ist ferner, daß ihre Herstellungsweise oft kompliziert und daher aufwending ist, daß der Diffusionswiderstand bei nachfolgenden Prozeßschritten unkontrollierbar beeinflußt und, daß damit die Reproduzierbarkeit des Diffusionswiderstandes unbefriedigend ist und daß weiter dessen Beständigkeit unter scharfer Beanspruchung im Abgas von Verbrennungsmotoren unzureichend ist.

### Vorteile der Erfindung

Die erfindungsgemäße polarographische Sonde mit den kennzeichnenden Merkmalen des Hauptanspruchs hat demgegenüber den Vorteil, daß sie einen einfachen und damit fertigungsgerechten Aufbau eines Sensors ermöglicht,
daß der Diffusionsbereich der Sonde gegenüber Veränderung bei nachfolgenden Prozeßschritten, z. B. Rißbildung oder Deformation durch Laminieren, Stanzen, Schneiden, Sintern usw. im Gegensatz zu siebgedruckten Diffusionssystemen weitestgehend unempfindlich ist,
daß eine erhöhte Reproduzierbarkeit des Diffusionswiderstandes erreicht wird,
daß eine direkte, definierte Einflußnahme auf die Sensorcharakteristik über die Auslegung des porös sinternden Formkörpers möglich ist,
daß die Anordnung der Gaszuführungsöffnung unabhängig vom Diffusionswiderstand variabel ist,
daß das Elektrodendesign in weiten Grenzen variabel ist und daß schließlich die Möglichkeit zu einer Erweiterung zum Breitbandsensor gegeben ist.

Die erfindungsgemäße planare polarographische Sonde läßt sich anstelle bekannter Sonden planarer Struktur verwenden. Die erfindungsgemäße Sonde kann somit als Magersensor für Dieselmotoren, und als solches in ein übliches Sensorgehäuse, z. B. des aus den DE-OS 32 06 903 und 35 37 051 bekannten Typs eingebaut und zur Messung des Kraftstoff-Luft-Verhältnisses in einem mageren Abgas verwendet werden.

Die erfindungsgemäße polarographische Sonde kann jedoch auch außer der Pumpzelle zusätzlich noch eine Nernstzelle (Konzentrationszelle) aufweisen, die mit einem zusätzlichen Luftreferenzkanal versehen ist und deren eine Elektrode im Bereich der Pumpelektrode im Diffusionskanal der Pumpzelle angeordnet ist und deren andere Elektrode sich im Luftreferenzkanal befindet.

Eine erfindungsgemäße planare polarographische Sonde wird in einfacher und vorteilhafter Weise durch Zusammenlaminieren und Sintern einer Pumpzelle (A) aus einer ersten Festelektrolytfolie mit mindestens einer äußeren Pumpelektrode und mindestens einer inneren Pumpelektrode mit einer Diffusionseinheit (B) aus einer zweiten Festelektrolytfolie und einer dritten, gegebenenfalls zu einer Heizereinheit (C) ausgebildeten Festelektrolytfolie hergestellt.

Erfindungsgemäß verwendet man dabei als Diffusionseinheit (B) eine Festelektrolytfolie mit einer eine Diffusionszone bildenden öffnung, in die ein bei Sintertemperatur porös sinternder Formkörper eingefügt wird. In vorteilhafter Weise verwendet man als Diffusionseinheit (B) eine Festelektrolytfolie, aus der eine die Diffusionzone bildende Öffnung ausgestanzt worden ist, in die ein aus einer porös sinternden Folie ausgestanzter Folienabschnitt eingefügt wird. Als besonders vorteilhaft hat es sich dabei erwiesen, als porös sinternde Folieneinlage eine Einlage aus keramischem Material mit einem thermischen Ausdehnungsverhalten zu verwenden, der dem Ausdehnungsverhalten der verwendeten Festelektrolytfolien entspricht oder zumindest nahekommt. Vorzugsweise verwendet man eine Folieneinlage aus dem keramischen Material, aus dem auch die die Sonde aufbauenden Festelektrolytfolien bestehen, wobei die Porosität der Einlage durch Zusatz von Porenbildnern erzeugt werden kann, die beim Sinterprozeß verbrennen, sich zersetzen oder verdampfen. Typische Porenbildner, die verwendet werden können, sind z. B. Thermalrußpulver, Kunststoffe, z. B. auf Polyurethanbasis, Salze, z. B. Ammoniumcarbonat und organische Substanzen, wie z. B. Theobromin und Indanthrenblau. Derartige Porenbildner werden dem porös sinternden Material, z. B. dem zur Herstellung einer porös sinternden Folie verwendeten Ausgangsmaterial in einer solchen Menge zugesetzt, daß ein Material mit einer Porosität von 10 bis 50 % anfällt. Der mittlere Porendurchmesser, der durch die Teilchengröße des verwendeten Porenbildners bestimmt werden kann, liegt vorzugsweise bei etwa 5 bis 50 µm.

Als vorteilhaft hat es sich ferner erwiesen, wenn man eine porös sinternde Einlage verwendet, deren Durchmesser etwas kleiner und deren Dicke etwas größer als die Dicke der zur Herstellung der Diffusionseinheit verwendeten Folie ist. Hierdurch wird ein sicheres Einfügen des porös sinternden Formkörpers in die vorbereitete Öffnung in der Folie der Diffusionseinheit sowie die Ausbildung eines guten Verbundes zwischen Pumpzelle (A), Diffusionseinheit (B) und Heizereinheit (C) im gesinterten Zustand gewährleistet.

Als vorteilhaft hat es sich ferner erwiesen, wenn der äußere Durchmesser des Elektroden-Layouts etwas kleiner gehalten wird als der Durchmesser der Diffusionszone. Dadurch wird gewährleistet, daß die innere Pumpelektrode innerhalb der porösen Diffusionsbarriere liegt. Als zweckmäßig hat es sich ferner erwiesen, wenn der Durchmesser der Diffusionszone 75 % der Breite der polarographischen Sonde nicht übersteigt.

Die Zufuhr des Meßgases erfolgt über ein Diffusionsloch in der Pumpzelle (A), und/oder ein Diffusionsloch in der Heizereinheit (C).

Der beim Sinterprozeß der polarographischen Sonde porös sinternde Formkörper nimmt den gesamten Raum der Aussparung in der Folie der Diffusionseinheit (B) ein.

Die Pumpzelle (A) und die Heizereinheit (C) besitzen einen Aufbau, wie er für planare polarographische Sonden bekannt ist.

Die Pumpzelle (A) besteht somit im wesentlichen aus einer Festelektrolytfolie mit einer äußeren Pumpelektrode und einer inneren Pumpelektrode sowie den dazugehörigen Leiterbahnen und Durchkontaktierungen. Elektroden und Leiterbahnen sind dabei durch eine Isolation, z. B. auf Al₂O₃-Basis gegenüber der Festelektrolytfolie isoliert. Die äußere Pumpelektrode ist mit einer porösen Schutzschicht (Engobe) bedeckt. Die Pumpzelle (A) wird mittels eines interlaminaren Binders üblicher bekannter Zusammensetzung mit der Diffusionseinheit (B) zusammenlaminiert.

Die Heizereinheit (C) besteht im wesentlichen aus einer weiteren Festelektrolytfolie mit ausgestanzten Durchkontaktierungslöchern, einer den Heizer gegenüber der Festelektrolytfolie isolierenden Schicht, dem eigentlichen Heizer, einer Isolationsschicht über dem Heizer, Heizeranschlüssen und einer Isolation für die Heizeranschlüsse. Weitere Einzelheiten des Aufbaues von Pumpzelle (A) und Heizereinheit (C) ergeben sich aus der später folgenden Beschreibung bevorzugter Ausführungsformen erfindungsgemäßer polarographischer Sonden.

Die Herstellung einer erfindungsgemäßen polarographischen Sonde erfolgt durch Zusammenlaminieren von Pumpzelle (A), Diffusionseinheit (B) und Heizereinheit (C) sowie gegebenenfalls weiteren Einheiten, wie z. B. einer Nernstzelle, indem man die Pumpzelle (A) und die Einheiten (B) und (C) unter Druck zusammenfügt und anschließend bei Sintertemperaturen im Bereich von 1300 bis 1550 °C sintert.

Weist die erfindungsgemäße polarographische Sonde gemäß einer weiteren vorteilhaften Ausgestaltung zusätzlich eine Nernstzelle (N) auf, so ist deren eine Elektrode in vorteilhafter Weise im Bereich der Pumpelektrode hinter dem den Diffusionswiderstand bildenden porös sinternden Formkörper angeordnet, und somit dem Abgas ausgesetzt, während die andere Elektrode der Nernstzelle mit einem üblichen Metall/Metalloxid-Referenzkörper bzw. einem Referenzgas, vorzugsweise mit Luft, in einem Referenzkanal, in Verbindung steht.

Eine als Breitbandsensor ausgeführte polarographische Sonde nach der Erfindung besteht somit in vorteilhafter Weise aus mindestens folgenden Einheiten:
- der Pumpzelle (A) ,
- der Diffusionseinheit (B),
- der Nernstzelle (N) aus zwei Festelektrolytfolien, wovon die eine Folie die Abgaselektrode und den Referenzkanal und die andere Folie die Referenzelektrode beinhaltet und
- der Heizereinheit (C), wobei
die Diffusionseinheit (B) eine Durchkontaktierung zur Nernst-Abgaselektrode aufweist und die Heizereinheit (C) eine Durchkontaktierung zur Nernst-Referenzelektrode.

Zur Herstellung der erfindungsgemäßen polarographischen Sonden eignen sich bekannte O⁻-Ionen leitende Festelektrolytfolien auf Basis von Oxiden vierwertiger Metalle, wie insbesondere ZrO₂, CeO₂, HfO₂ und ThO₂ mit einem Gehalt an zweiwertigen Erdalkalioxiden und/oder vorzugsweise dreiwertigen Oxiden der seltenen Erden. In typischer Weise können die Folien zu etwa 50 bis 97 Mol-% aus ZrO₂, CeO₂, HfO₂ oder ThO₂ und zu 50 bis 3 Mol-% aus CaO, MgO oder SrO und/oder Oxiden der seltenen Erden und insbesondere Y₂O₃ bestehen. In vorteilhafter Weise bestehen die Festelektrolytfolien aus mit Y₂O₃ stabilisiertem ZrO₂. In zweckmäßiger Weise liegt die Dicke der verwendeten Folien bei 0,1 bis 0,6 mm.

Die Pumpelektroden und die dazugehörigen Leiterbahnen können in üblicher bekannter Weise ausgehend von Pasten auf Edelmetallbasis, insbesondere Platinbasis oder Edelmetall-Cermetbasis, insbesondere Platin-Cermetbasis auf die in vorteilhafter Weise partiell mit einer isolierenden Schicht versehenen Festelektrolytfolien aufgedruckt werden. Das Layout der Pumpelektroden wird an die Ausführungsform der Diffusionseinheit angepaßt.

In entsprechender Weise kann bei der Herstellung der Heizereinheit (C) der Heizer auf eine zuvor isolierte Festelektrolytfolie aufgedruckt werden. Ein entsprechendes Heizer-Layout ermöglicht das Stanzen oder Bohren von Diffusionslöchern ohne Beschädigung der Heizleiterbahn. Die Abdichtung des Heizers kann mittels auf die Folie aufgedruckter Rahmen erfolgen, wie später noch im einzelnen gezeigt werden wird.

### Zeichnung

In der Zeichnung sind besonders vorteilhaft Ausführungsformen von erfindungsgemäßen polarographischen Sonden beispielsweise dargestellt. Den dargestellten Sonden ist gemein, daß sie aus mindestens drei Folieneinheiten aufgebaut sind, nämlich
der Pumpzelle (A) ;
der Diffusionseinheit (B) und
der Heizereinheit (C) sowie gegebenenfalls
einer Nernstzelle (N).
Im einzelnen sind dargestellt in:
- Fig. 1:: das Layout einer 1. Ausführungsform einer planaren polarographischen Sonde nach der Erfindung;
- Fig. 2:: ein Querschnitt durch die Diffusionszone einer polarographischen Sonde gemäß Fig. 1;
- Fig. 3:: gelöscht
- Fig. 4:: das Layout der Pumpzelle (A) einer 2. Ausführungsform einer planaren polarographischen Sonde nach der Erfindung;
- Fig. 5:: ein Querschnitt durch die Diffusionszone einer planaren polarographischen Sonde gemäß Fig. 4;
- Fig. 6:: gelöscht
- Fig. 7:: das Layout der Pumpzelle (A) einer 3. Ausführungsform einer planaren polarographischen Sonde nach der Erfindung;
- Fig. 8:: ein Querschnitt durch die Diffusionszone einer planaren polarographischen Sonde gemäß Fig. 7;
- Fig. 9-12:: gelöscht
- Fig. 13:: das Layout einer 4. Ausführungsform einer planaren polarographischen Sonde nach der Erfindung, die außer einer Pumpzelle (A), einer Diffusionseinheit (B) und einer Heizereinheit (C) eine Nernstzelle (N) aufweist und somit einen Breitbandsensor darstellt;
- Fig. 14:: ein Querschnitt durch die Diffusionzone eines Breitbandsensors gemäß Fig. 13;
- Fig. 15:: ein Längsschnitt durch die Diffusionszone eines Breitbandsensors gemäß Fig. 13.

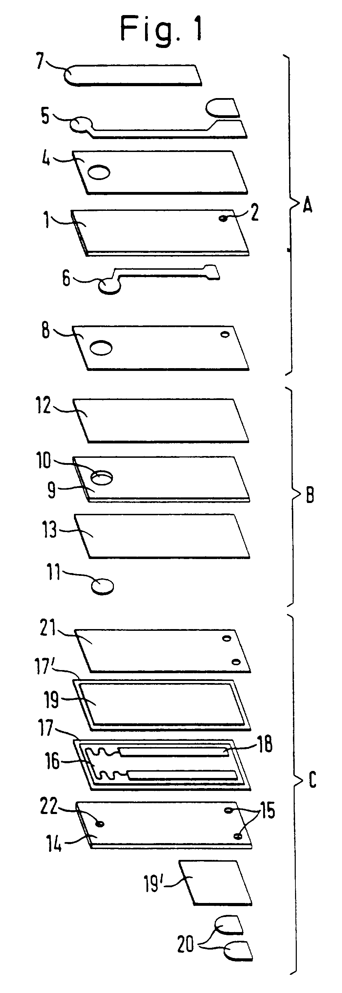

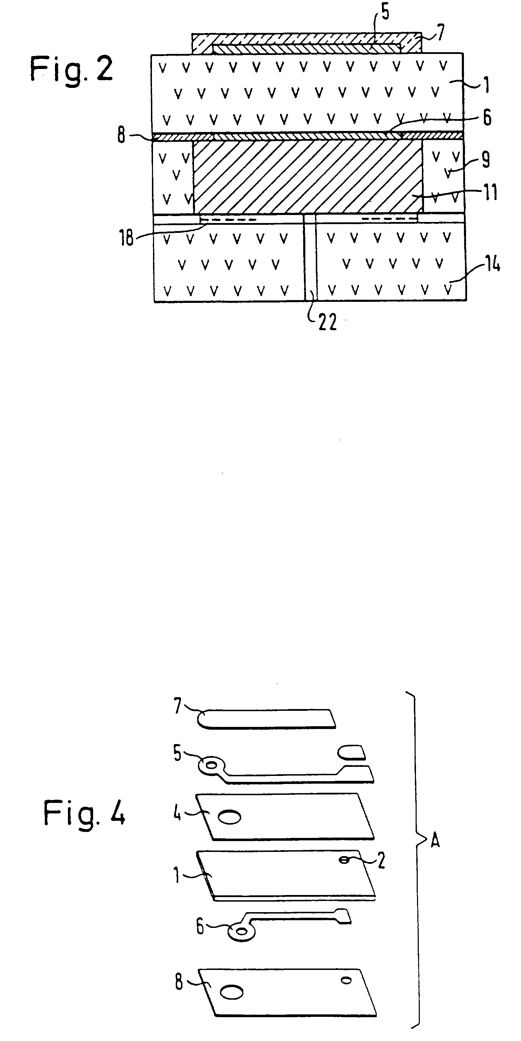

Gemäß der in den Fig. 1 und 2 schematisch dargestellten 1. Ausführungsform ist die Pumpzelle (A) aufgebaut aus der Festelektrolytfolie 1 mit ausgestanztem Durchkontaktierungsloch 2; der Isolation 4, der äußeren Pumpelektrode 5, der inneren Pumpelektrode 6 und der Schutzschicht (Engobe) 7. Zur Verbindung mit der Diffusionseinheit (B)-dient eine Schicht aus einem interlaminaren Binder 8. Die Elektroden weisen, wie dargestellt, jeweils eine Leiterbahn und Anschlüsse auf.

Die Diffusionseinheit (B) besteht aus der Festelektrolytfolie 9 mit ausgestanzter Diffusionszone 10, dem Formkörper 11 und den Schichten 12 und 13 aus interlaminarem Binder.

Die Heizereinheit (C) besteht aus der Festelektrolytfolie 14 mit ausgestanzten Kontaktierungslöchern 15 und ausgestanztem Diffusionsloch 22, der Heizerisolation 16, dem Rahmen 17 und 17', dem Heizer 18, der Heizerisolation 19 und 19' sowie den Heizeranschlüssen 20. Die Heizereinheit (C) ist über die Schicht 21 aus interlaminarem Binder mit der Diffusionseinheit (B) zusammenlaminiert.

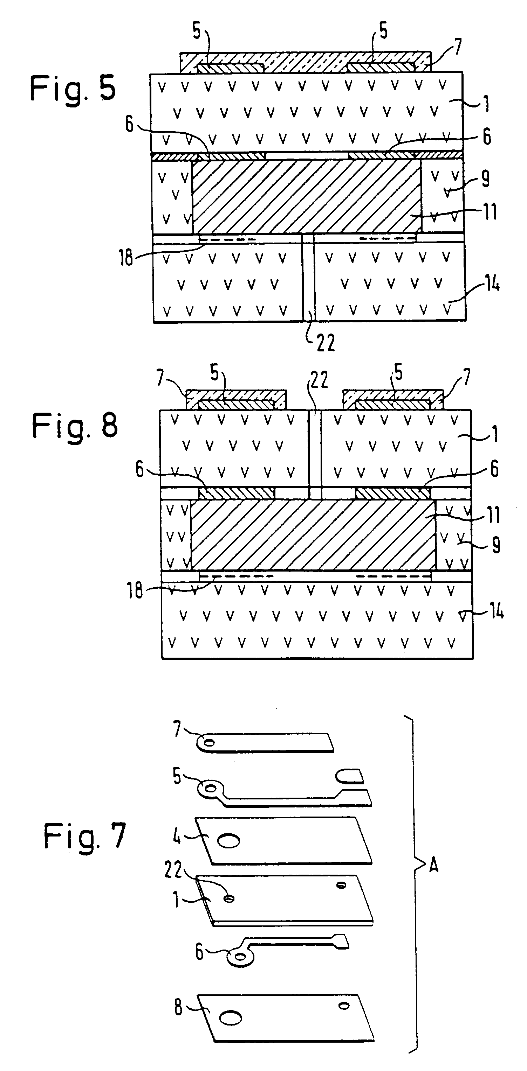

Die in den Fig. 4 und 5 schematisch dargestellte 2. Ausführungsform unterscheidet sich von der 1. Ausführungsform lediglich im Elektroden-Layout.

Bei der in den Fig. 7 und 8 schematisch dargestellten 3. Ausführungsform einer Sonde nach der Erfindung befindet sich das Diffusionsloch 22 nicht in der Heizereinheit (C) sondern in der Pumpzelle (A).

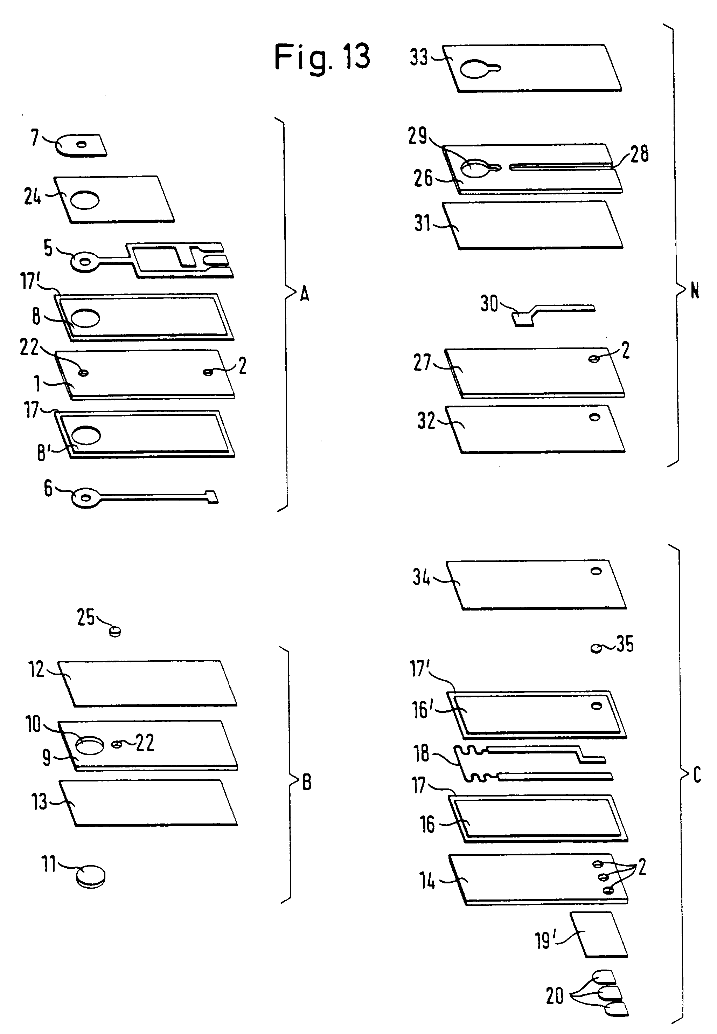

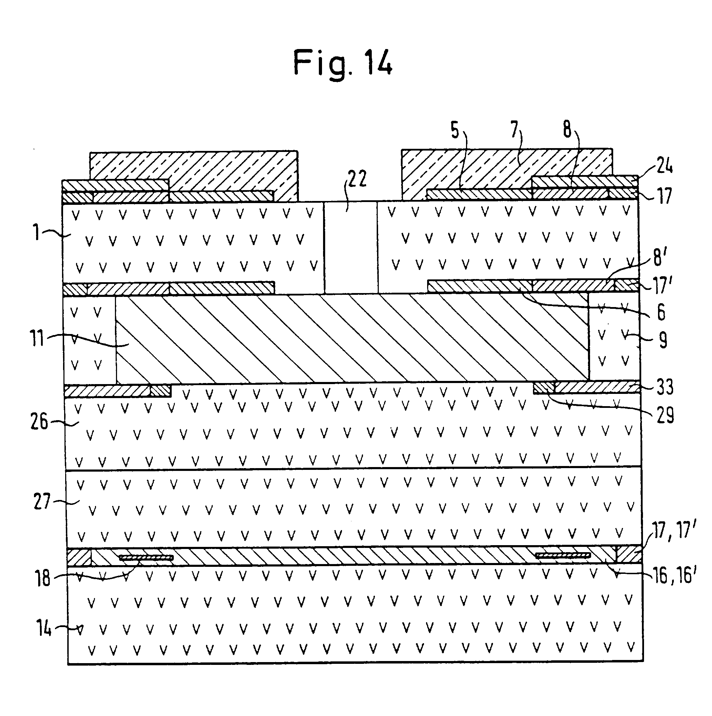

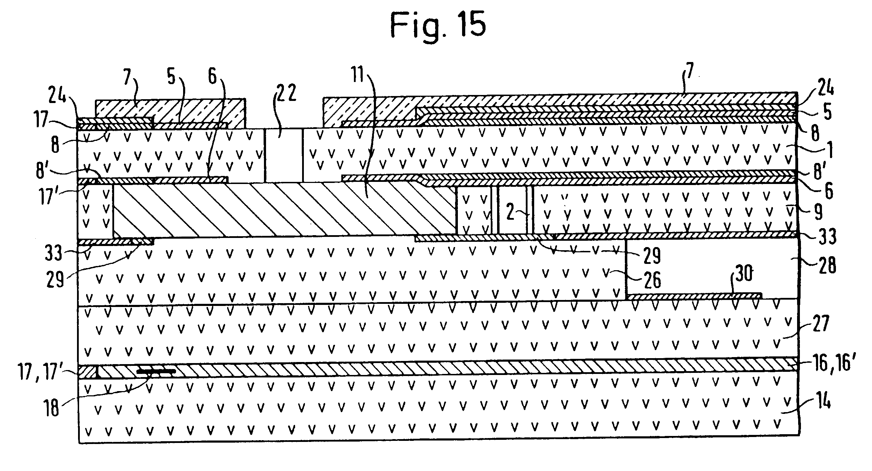

Bei der in den Fig. 13 bis 15 schematisch dargestellten 4. Ausführungsform einer polarographischen Sonde nach der Erfindung handelt es sich im Gegensatz zu den in den Figuren 1 bis 12 schematisch dargestellten Ausführungsformen erfindungsgemäßer polarographischer Sonden um eine zu einem Breitbandsensor ausgebildete polarographische Sonde, die sich im wesentlichen dadurch von den zuvor beschriebenen polarographischen Sonden unterscheidet, daß sie zusätzlich zur Pumpzelle (A), zur Diffusionseinheit (B) und zur Heizereinheit (C) eine Nernstzelle (N) aufweist.

Die Pumpzelle (A) besteht aus der Festelektrolytfolie 1 mit ausgestanztem Diffusionsloch 22 und ausgestanztem Durchkontaktierungsloch 2, der äußeren Pumpelektrode 5 mit einem Trimmwiderstand, der inneren Pumpelektrode 6, den Isolationen 8 und 8', Rahmen 17 und 17', der Abdichtschicht 24 aus interlaminarem Binder und der porösen Schutzschicht (Engobe) 7 auf Al₂O₃/ZrO₂-Basis.

Die Diffusionseinheit (B) besteht aus der Festelektrolytfolie 9 mit ausgestanzter Diffusionszone 10 und ausgestanztem Durchkontaktierungsloch 2, den Schichten 12 und 13 aus interlaminarem Binder, dem porösen Formkörper 11 und dem elektrisch leitenden Verbindungspin 25 aus Pt-Paste zur inneren Pumpelektrode 6.

Die Nernstzelle (N) wird gebildet aus der Festelektrolytfolie 26 mit ausgestanztem Referenzluftkanal 28 und aufgedruckter Meßelektrode (Nernstzelle) 29, der Festelektrolytfolie 27 mit Durchkontaktierungsloch 2, der Referenzelektrode 30 sowie den Schichten 31, 32 und 33 aus einem üblichen interlaminaren Binder.

Die Heizereinheit (C) ist aufgebaut aus der Festelektrolytfolie 14 mit Durchkontaktierungslöchern 2, dem Heizer 18, den Isolationen 16, 16' und 19', Rahmen 17, 17', Anschlüssen 20 für den Heizer 18 und die Referenzelektrode 30, der Schicht 34 aus üblichem interlaminarem Binder sowie dem elektrisch leitenden Verbindungspin 35 aus Pt-Paste zur Referenzelektrode 30.

### Beispiel

Die Herstellung einer erfindungsgemäßen polarographischen Sonde soll am Beispiel der in den Figuren 1 und 2 schematisch dargestellten Sonde näher beschrieben werden.

Zur Herstellung der Pumpzelle (A) wurde eine im ungesinterten Zustand etwa 0,3 mm dicke Festelektrolytfolie 1 aus mit Y₂O₃ stabilisiertem ZrO₂ durch Aufbringen von etwa 15 bis 20 µm starken Al₂O₃-Schichten 4 und 8 auf beide Seiten der Festelektrolytfolie 1 isoliert. Danach wurde ein Durchkontaktierungsloch 2 für den Leiterbahnanschluß der inneren Pumpelektrode 6 ausgestanzt. Nach Erzeugung der Durchkontaktierung wurden die äußere und die innere Pumpelektrode 5 bzw. 6 nebst dazugehörigen Leiterbahnen unter Verwendung einer üblichen Pt-Cermet-Paste aufgedruckt. Zum Zwecke der Durchkontaktierung wurde das Durchkontaktierungsloch 2 mit einer elektrisch leitenden Pt/A1203-Cermetschicht versehen. Auf die die innere Pumpelektrode 6 aufweisende Seite der Festelektrolytfolie 1 wurde dann eine Schicht 8 aus einem üblichen interlaminaren Binder aus YSZ-Bindermasse aufgedruckt.

Zur Herstellung der Diffusionseinheit (B) wurde eine zweite, im ungesinterten Zustand etwa 0,3 mm dicke Festelektrolytfolie 9 aus mit Y₂O₃ stabilisiertem ZrO₂ beidseitig mit Binderschichten 12 und 13 aus YSZ-Bindermasse bedruckt, worauf eine kreisrunde Diffusionsnzone 10 mit einem Durchmesser von 3,85 mm ausgestanzt wurde.

Aus einer weiteren 0,3 mm dicken, porös sinternden Festelektrolytfolie auf Basis von mit Y₂O₃ stabilisiertem ZrO₂ mit einer Porosität von 20 - 30 % wurde ein kreisrunder Formkörper 11 eines Durchmessers von 3,8 mm ausgestanzt und in die Diffusionszone 10 der die Diffusionseinheit (B) bildenden Festelektrolytfolie 9 eingefügt.

Zur Herstellung der Heizereinheit (C) wurden auf eine dritte, im ungesinterten Zustand 0,3 mm dicke Festelektrolytfolie 14 aus mit Y₂O₃ stabilisiertem ZrO₂ Isolierungen 16 und 19' auf Al₂O₃-Basis zur Isolierung des Heizers 18 und der Heizeranschlüsse 20 sowie ein Rahmen 17 aus interlaminarem Binder aufgedruckt. Daraufhin wurden die Durchkontaktierungslöcher 15 ausgestanzt. Die Durchkontaktierungslöcher 15 wurden mit einer Al₂O₃-Isolationsschicht sowie darüber mit einer elektrisch leitenden Pt/Al₂O₃-Cermetschicht versehen. Danach wurden der Heizer 18 unter Verwendung einer Pt/Al₂O₃-Cermetpaste, eine Al₂O₃-Isolationsschicht 19 sowie ein Rahmen 17' aus interlaminarem Binder aus YSZ-Bindermasse aufgedruckt. Anschließend wurde auf die Isolationsschicht 19 eine Schicht 21 aus einem interlaminaren Binder aufgebracht. Abschließend wurde das Diffusionsloch 22 gestanzt oder gebohrt.

Nach dem Zusammenlaminieren der drei Einheiten (A), (B) und (C) wurde der erhaltene Verbundkörper bei einer Temperatur im Bereich von 1400 °C gesintert.

Die hergestellte polarographische Sonde wurde in ein Gehäuse des aus der DE-OS 32 06 903 bekannten Typs eingesetzt und zur Bestimmung des λ-Wertes von Gasgemischen verwendet. Es wurden ausgezeichnet reproduzierbare Ergebnisse erhalten.

Vorzugsweise erfolgt die Herstellung einer erfindungsgemäßen polarographischen Sonde maschinell im Mehrfachnutzen. In vorteilhafter Weise liegt die Breite der Sonde bei etwa 4 bis 6 mm. Der Elektrodendurchmesser beträgt dabei in vorteilhafter Weise 3 bis 4 mm, z. B. 3,6 mm.

## Patentansprüche

1. Polarographische Sonde zur Bestimmung des Lambda-Wertes von Gasgemischen, insbesondere von Abgasen von Verbrennungsmotoren, mit einem Diffusionswiderstand vor einer Pumpelektrode (6) einer Pumpzelle (A), mindestens drei Festelektrolytfolien (1, 9, 14), nämlich einer ersten, die Pumpzelle (A) bildenden Festelektrolytfolie (1), die eine äußere und eine innere Pumpelektrode (6) mit Leiterbahnen aufweist, einer zweiten, eine Diffusionseinheit (B) bildende und eine Diffusionszone (10) aufweisende Festelektrolytfolie (9), wobei die innere Pumpelektrode (6) auf der ersten Festelektrolytfolie (1) in der Diffusionszone (10) dem Gasgemisch ausgesetzt ist, und einer dritten Festelektrolytfolie (14), wobei die Diffusionszone (10) durch eine Aussparung in der mit der ersten Festelektrolytfolie (1) und der dritten Festelektrolytfolie (14) zusammenlaminierten zweiten Festelektrolytfolie (9) gebildet ist und wobei mindestens eine der beiden ersten und dritten Festelektrolytfolien (1, 14) ein durch die Festelektrolytfolie (1, 14) durchgehendes und zur Diffusionszone (10) führendes Diffusionsloch (22) aufweist, dadurch gekennzeichnet, daß die Diffusionszone (10) vollständig mit einem beim Sinterprozeß der Sonde porös sinternden Formkörper (11) ausgefüllt ist.

2. Polarographische Sonde nach Anspruch 1, dadurch gekennzeichnet, daß der Formkörper (11) aus einem porös gesinterten Keramikmaterial besteht, das mindestens zum überwiegenden Teil aus ZrO₂ und/oder Al₂O₃ gebildet wird.

3. Polarographische Sonde nach einem der Ansprüche 1 und 2, dadurch gekennzeichnet, daß der Formkörper (11) in der Diffusionszone (10) aus einem aus einer porös sinternden Keramikfolie erhaltenen Blättchen besteht.

4. Polarographische Sonde nach Anspruch 1, dadurch gekennzeichnet, daß die dritte, zu einer Heizereinheit (C) ausgebildete Festelektrolytfolie (14) ein Diffusionsloch (22) für den Zutritt des Meßgases in die Diffusionszone (10) aufweist.

5. Polarographische Sonde nach Anspruch 1, dadurch gekennzeichnet, daß der mittlere Porendurchmesser des porös gesinterten Formkörpers (11) 5 bis 50 µm beträgt.

6. Polarographische Sonde nach Anspruch 1, dadurch gekennzeichnet, daß zusätzlich eine Nernstzelle (N) vorgesehen ist, deren eine Elektrode im Bereich der Pumpelektrode hinter dem den Diffusionswiderstand bildenden porös sinternden Formkörper (11) angeordnet ist und somit dem Abgas ausgesetzt ist, während die andere Elektrode der Nernstzelle mit einem Metall-/Metalloxid-Referenzkörper beziehungsweise einem Referenzgas, vorzugsweise mit Luft, in einem Referenzkanal in Verbindung steht.

7. Verfahren zur Herstellung einer planaren polarographischen Sonde nach einem der Ansprüche 1 bis 6, bei dem man eine erste, eine Pumpzelle (A) bildende Festelektrolytfolie mit einer äußeren und einer inneren Pumpelektrode sowie mit Leiterbahnen versieht und mit einer zweiten, eine Diffusionseinheit (B) bildenden Festelektrolytfolie sowie mit einer dritten, gegebenenfalls eine Heizereinheit (C) bildenden Festelektrolytfolie und gegebenenfalls mit weiteren, eine Nernstzelle (N) bildenden Festelektrolytfolien zusammenlaminiert, wobei zuvor das Diffusionsloch gestanzt oder gebohrt wurde, und das Laminat durch Erhitzen sintert, dadurch gekennzeichnet, daß man als zweite, die Diffusionseinheit (B) bildende Festelektrolytfolie (9) eine Folie verwendet, aus der zunächst eine die Diffusionszone (10) bildende Öffnung ausgestanzt wurde, in die ein bei Sintertemperatur porös sinternder, die Öffnung vollständig ausfüllender Formkörper (11) eingefügt worden ist.

## Claims

1. Polarographic probe for determining the lambda value of gas mixtures, particularly of exhaust gases of internal combustion engines, having a diffusion resistance preceding a pumping electrode (6) of a pumping cell (A), at least three solid electrolyte foils (1, 9, 14), namely a first solid electrolyte foil (1) which forms the pumping cell (A) and exhibits an outer *and* an inner pumping electrode (6) with conductor tracks, a second solid electrolyte foil (9) which forms a diffusion unit (B) and exhibits a diffusion zone (10), the inner pumping electrode (6) on the first solid electrolyte foil (1) in the diffusion zone (10) being exposed to the gas mixture, and a third solid electrolyte foil (14), the diffusion zone (10) being formed by a recess in the second solid electrolyte foil (9), which is laminated together with the first solid electrolyte foil (1) and the third solid electrolyte foil (14), and at least one of the two solid electrolyte foils (1, 14), the first and third ones, exhibiting a diffusion hole (22) which passes through the solid electrolyte foil (1, 14) and leads to the diffusion zone (10), characterized in that the diffusion zone (10) is completely filled with a preshaped body (11) which becomes porous on sintering during the sintering process of the probe.

2. Polarographic probe according to Claim 1, characterized in that the preshaped body (11) consists of a porously sintered ceramic material which at least predominantly is formed of ZrO₂ and/or Al₂O₃.

3. Polarographic probe according to one of Claims 1 and 2, characterized in that the preshaped body (11) in the diffusion zone (10) consists of a lamina obtained from a ceramic foil which becomes porous on sintering.

4. Polarographic probe according to Claim 1, characterized in that the third solid electrolyte foil (14), which is constructed to form a heater unit (C), exhibits a diffusion hole (22) for the entry of the gas to be measured into the diffusion zone (10).

5. Polarographic probe according to Claim 1, characterized in that the mean pore diameter of the porously sintered preshaped body (11) is 5 to 50 µm.

6. Polarographic probe according to Claim 1, characterized in that a Nernst cell (N) is additionally provided , the one electrode of which is arranged in the area of the pumping electrode behind the preshaped body (11) which becomes porous on sintering and forms the diffusion resistance, and is thus exposed to the exhaust gas whilst the other electrode of the Nernst cell is connected to a metal/metal oxide reference body or a reference gas, preferably to air in a reference channel.

7. Method for producing a planar polarographic probe according to one of Claims 1 to 6, in which a first solid electrolyte foil, forming a pumping cell (A), is provided with an outer and an inner pumping electrode and with conductor tracks and is laminated together with a second solid electrolyte foil, forming a diffusion unit (B), and with a third solid electrolyte foil, forming, if necessary, a heater unit (C), and, if necessary, with further solid electrolyte foils, forming a Nernst cell (N), the diffusion hole having previously been stamped or drilled, and the laminate is sintered by heating, characterized in that as second solid electrolyte foil (9) forming the diffusion unit (B), a foil is used from Which initially an opening forming the diffusion zone (10) has been stamped out into which a preshaped body (11), which becomes porous on sintering at sintering temperature and completely fills the opening, has been inserted.

## Revendications

1. Sonde polarographique pour la détermination de la valeur lambda de mélanges de gaz, en particulier de gaz d'échappement de moteurs à combustion interne, avec une résistance de diffusion avant une électrode (6) d'une cellule de pompage (A), avec au moins trois feuilles d'électrolyte solide (1, 9, 14) à savoir une première feuille d'électrolyte solide (1) formant la cellule de pompage (A), feuille qui présente une électrode extérieure de pompage (6) avec des pistes conductrices, une seconde feuille d'électrolyte solide (9) formant une unité de diffusion (B) et présentant une zone de diffusion (10), l'électrode intérieure de pompage (6) sur la première feuille d'électrolyte solide (1) étant exposée au mélange gazeux dans la zone de diffusion (10), et une troisième feuille d'électrolyte solide (14), la zone de diffusion (10) étant formée par un évidement dans la deuxième feuille d'électrolyte solide (9) laminée en même temps que la première feuille d'électrolyte solide (1) et la troisième feuille d'électrolyte solide (14), et au moins l'une des première et troisième feuilles d'électrolyte solide (1, 14) présentant un trou de diffusion (22) passant à travers les feuilles d'électrolyte solide (1, 14) et allant à la zone de diffusion (10), sonde polarographique caractérisée en ce que la zone de diffusion (10) est complètement remplie d'un corps profilé (11) fritté de façon poreuse lors du processus de frittage de la sonde.

2. Sonde polarographique selon la revendication 1, caractérisée en ce que le corps profilé (11) consiste en une matière céramique frittée de façon poreuse, qui est formée au moins de façon prépondérante de dioxyde de zirconium ZrO₂et/ou d'alumine Al₂O₃.

3. Sonde polarographique selon l'une des revendications 1 et 2, caractérisée en ce que le corps profilé (11) dans la zone de diffusion (10), consiste en une petite feuille contenant une feuille céramique frittée de façon poreuse.

4. Sonde polarographique selon la revendication 1, caractérisée en ce que la troisième feuille d'électrolyte solide (14) constituée en unité de chauffage (C), présente un trou de diffusion (22) pour l'arrivée des gaz à mesurer dans la zone de diffusion (10).

5. Sonde polarographique selon la revendication 1, caractérisée en ce que le diamètre moyen du corps profilé fritté de façon poreuse (11), atteint 5 à 50 µm.

6. Sonde polarographique selon la revendication 1, caractérisée en ce qu'il est prévu en plus une cellule de Nernst (N) dont une électrode est disposée dans la zone de l'électrode de pompage derrière le corps profilé (11), fritté de façon poreuse, constituant la résistance de diffusion et qui est soumise de cette façon aux gaz d'échappement, tandis que l'autre électrode de la cellule de Nernst est en liaison avec un corps de référence en métal/oxyde métallique ou avec un gaz de référence, de préférence de l'air, dans un canal de référence.

7. Procédé de fabrication d'une sonde polarographique plane selon l'une des revendications 1 à 6, dans lequel on prévoit une première feuille d'électrolyte solide (1) formant une cellule de pompage (A), avec une électrode extérieure et une électrode intérieure de pompage ainsi qu'avec des pistes conductrices, avec une seconde feuille d'électrolyte solide (9) formant une unité de diffusion (B), ainsi qu'avec une troisième feuille d'électrolyte solide (14), formant le cas échéant une unité de chauffage (C), ces feuilles étant laminées ensemble le cas échéant avec d'autres feuilles d'électrolyte solide formant une cellule de Nernst (N), le trou de diffusion ayant été auparavant estampé ou percé et le produit laminé ayant été fritté par chauffage, procédé caractérisé en ce que l'on utilise comme deuxième feuille d'électrolyte solide (9) formant l'unité de diffusion (B), une feuille à partir de laquelle on a d'abord estampé une ouverture constituant la zone de diffusion (10) dans laquelle on a inséré un corps profilé (11) fritté de façon poreuse à la température de frittage et remplissant complètement l'ouverture.
